# EUROPÄISCHE PATENTANMELDUNG

(11) **EP 3 982 501 A1**
(43) Veröffentlichungstag der Anmeldung: **13.04.2022**
(21) Anmeldenummer: 20201333.0
(22) Anmeldetag: 12.10.2020
(51) Int. Cl.: H02J 1/10, C25B 15/08

(54) **BETREIBEN EINER ELEKTROLYSEVORRICHTUNG**

(71) Anmelder: Siemens Energy Global GmbH & Co. KG, 81739 München (DE)
(72) Erfinder: Utz, Peter, 90419 Nürnberg (DE)

(57) **Zusammenfassung**

Die Erfindung betrifft eine Elektrolysevorrichtung (10) mit wenigstens einer Elektrolysezelle (12) und einer an die wenigstens eine Elektrolysezelle (12) angeschlossenen Elektrolyseenergiequelle (14). Die Erfindung betrifft weiterhin ein Verfahren zum Betreiben einer Elektrolysevorrichtung (10), wobei wenigstens eine Elektrolysezelle (12) der Elektrolysevorrichtung (10) im bestimmungsgemäßen Betrieb mit einem elektrischen Elektrolysestrom (48) beaufschlagt wird, um eine Elektrolyse eines in einem Reaktionsraum der Elektrolysezelle (12) angeordneten Stoffs durchzuführen, und wobei der elektrische Elektrolysestrom (48) mittels einer Sensoreinheit (46) erfasst wird.

Der Erfindung liegt die Aufgabe zugrunde, die Sicherheit einer Elektrolysevorrichtung (10) beziehungsweise einer Elektrolysezelle (12) sowie deren Betrieb außerhalb des bestimmungsgemäßen Elektrolysebetriebs zu verbessern.

Erfindungsgemäß wird die wenigstens eine Elektrolysezelle (12) abhängig vom erfassten elektrischen Elektrolysestrom (48) mit einer Schutzspannung (Uₛ) beaufschlagt, die für die wenigstens eine Elektrolysezelle (12) individuell bereitgestellt wird.

## Beschreibung

Die Erfindung betrifft eine Schaltungsanordnung für wenigstens eine Elektrolysezelle einer Elektrolysevorrichtung, mit einer elektrischen Hilfsspannungsquelle, die dem Bereitstellen einer elektrischen Hilfsgleichspannung dient, und Anschlusskontakten zum elektrischen Verbinden mit Zellenanschlüssen der wenigstens einen Elektrolysezelle. Darüber hinaus betrifft die Erfindung eine Elektrolysevorrichtung mit wenigstens einer Elektrolysezelle und einer an die wenigstens eine Elektrolysezelle angeschlossenen Elektrolyseenergiequelle. Schließlich betrifft die Erfindung auch ein Verfahren zum Betreiben einer Elektrolysevorrichtung, wobei wenigstens eine Elektrolysezelle der Elektrolysevorrichtung im bestimmungsgemäßen Betrieb mit einem elektrischen Elektrolysestrom beaufschlagt wird, um eine Elektrolyse eines in einem Reaktionsraum der Elektrolysezelle angeordneten Stoffs durchzuführen, und wobei der elektrische Elektrolysestrom mittels einer Sensoreinheit erfasst wird.

Elektrolysevorrichtungen, insbesondere für die Elektrolyse von Wasser zu Wasserstoff und Sauerstoff, sind im Stand der Technik umfänglich bekannt, so zum Beispiel aus der DE 197 29 429 C1. Die grundlegende Funktion der Elektrolyse, insbesondere der Wasserelektrolyse, ist dem Fachmann bekannt, weshalb von detaillierten Erläuterungen hierzu abgesehen wird.

Elektrolysevorrichtungen, die eine einzelne, insbesondere jedoch eine Vielzahl von Elektrolysezellen aufweisen, die in der Regel zumindest teilweise elektrisch in Reihe geschaltet sind, dienen insbesondere dazu, vorzugsweise im industriellen Umfang nutzbare Stoffe, beispielsweise Wasserstoff bei einer Wasserelektrolyse, Kohlenmonoxid bei einer Kohlendioxidelektrolyse oder dergleichen herzustellen. Zu diesem Zweck sind wenigstens zwei Elektroden einer jeweiligen Elektrolysezelle mit einer geeigneten kleinen elektrischen Gleichspannung beaufschlagt, die im Bereich von einigen wenigen Volt oder eventuell sogar kleiner als 1 V sein kann. Entsprechend der durch die Elektrolyse bereitzustellenden Stoffmenge wird durch die Elektrolyseenergiequelle ein entsprechender elektrischer Gleichstrom als Elektrolysestrom bereitgestellt. Bei in Reihe geschalteten Elektrolysezellen durchströmt dieser Gleichstrom sämtliche der in Reihe geschalteten Batteriezellen. Die Reihenschaltung ist elektrisch an die Elektrolyseenergiequelle angeschlossen. Dem Grunde nach jedoch zumindest teilweise auch eine Parallelschaltung von Elektrolysezellen vorgesehen sein.

Insbesondere bei wässrigen Elektrolysen, wie zum Beispiel Chlor-Alkali-Elektrolysen, PEM-Elektrolysen oder dergleichen ist in der Regel eine Membran vorgesehen, welche jeweilige Reaktionskammern eines Reaktionsbereichs einer jeweiligen Elektrolysezelle, in denen jeweilige Elektroden angeordnet sind, trennt. Darüber hinaus ist häufig auf einer jeweiligen Membran ein Katalysator angeordnet, um den Vorgang der Elektrolyse zu ermöglichen beziehungsweise zu beschleunigen. Die Elektrolyse wird dadurch realisiert, dass die Elektroden einer jeweiligen Elektrolysezelle im bestimmungsgemäßen Betrieb mit einem geeigneten elektrischen Elektrolysestrom sowie einer geeigneten elektrischen Gleichspannung beziehungsweise Zellenspannung beaufschlagt sind.

Als problematisch erweist es sich dabei, wenn eine die Zellenspannung beziehungsweise den Elektrolysestrom bereitstellende Elektrolyseenergiequelle nicht aktiv ist, weil sie beispielsweise ausgeschaltet ist, eine Störung vorliegt oder dergleichen. Dies kann zur Folge haben, dass in einer jeweiligen Elektrolysezelle, in der die Elektrolyse im Reaktionsbereich durchgeführt wird, in dem auch die Elektroden und die Membran angeordnet sind, unerwünschte Prozesse auftreten können. Beispielsweise aufgrund von Gasresten, insbesondere bei einer Wasserelektrolyse, besteht die Gefahr, dass sich die elektrische Spannung beziehungsweise Zellenspannung an Zellenanschlüssen der Elektrolysezelle gegenüber dem bestimmungsgemäßen Betrieb hinsichtlich ihrer Polarität invertiert und es in der Elektrolysezelle zu einer Reaktion nach Art einer Brennstoffzelle kommen kann. Dies kann eine starke Alterung der Elektrolysezelle, insbesondere der Membran, zur Folge haben.

Im Stand der Technik wird die vorgenannte Problematik dadurch reduziert, dass parallel zur Elektrolyseenergiequelle eine weitere Hilfsenergiequelle parallelgeschaltet an die Reihenschaltung angeschlossen ist. Die Hilfsenergiequelle braucht dabei keine große Leistung bereitzustellen, sondern liefert lediglich einen deutlich kleineren definierten Schutzstrom, der die in Reihe geschalteten Elektrolysezellen durchströmt. Der Schutzstrom ist dabei derart bemessen, dass für sämtliche der in Reihe geschalteten Elektrolysezellen eine ausreichende elektrische Spannung an den jeweiligen Zellenanschlüssen erreicht wird, die die vorgenannten Probleme vermeidet.

Sind die Elektrolyseenergiequelle und die Hilfsenergiequelle von einem Energieversorgungsnetz mit elektrischer Energie versorgt, die eine Wechselspannung nutzt, kann die Elektrolyseenergiequelle durch einen Gleichrichter gebildet sein, der auch Hauptgleichrichter genannt werden kann. Die Hilfsenergiequelle kann ebenfalls durch einen geeigneten Gleichrichter gebildet sein, der auch Polarisationsgleichrichter genannt werden kann.

Die vorgenannte Nutzung der Hilfsenergiequelle hat jedoch den nachteiligen Effekt, dass es unter anderem im ausgeschalteten Zustand der Elektrolysevorrichtung weiterhin zu einer - wenn unter Umständen auch geringen - Produktion der Elektrolysestoffe kommt. In Bezug auf eine Wasserelektrolyse beziehungsweise eine Kohlenstoffdioxidelektrolyse kann hier eine weitere kontinuierliche Gasproduktion die Folge sein.

Im Stand der Technik ist die Auslegung der Elektrolysevorrichtung betriebstechnisch nicht auf diese Anwendung optimiert. Daher kann es hierdurch zu undefinierten Betriebszuständen kommen, die im ungünstigsten Fall sogar zum Entstehen eines zündfähigen Gasgemisches führen können. Im Stand der Technik ist es daher weiterhin erforderlich, zusätzliche Schutzmaßnahmen vorzusehen, um gefährliche Betriebszustände der Elektrolysevorrichtung beziehungsweise der jeweiligen Elektrolysezellen gerade auch außerhalb des bestimmungsgemäßen Elektrolysebetriebs zu vermeiden.

Der Erfindung liegt somit die Aufgabe zugrunde, die Sicherheit einer Elektrolysevorrichtung beziehungsweise einer Elektrolysezelle sowie deren Betrieb insbesondere außerhalb des bestimmungsgemäßen Elektrolysebetriebs zu verbessern.

Als Lösung werden mit der Erfindung eine Schaltungsanordnung, eine Elektrolysevorrichtung sowie ein Verfahren gemäß den unabhängigen Ansprüchen vorgeschlagen.

Vorteilhafte Weiterbildungen ergeben sich durch Merkmale der abhängigen Ansprüche.

In Bezug auf eine gattungsgemäße Schaltungsanordnung wird mit der Erfindung insbesondere vorgeschlagen, dass die Schaltungsanordnung eine Schutzspannungseinheit, die mit der elektrischen Hilfsspannungsquelle elektrisch gekoppelt ist und die ausgebildet ist, eine individuelle Schutzspannung für die wenigstens eine Elektrolysezelle bereitzustellen, sowie eine Schalteinheit aufweist, die an die Schutzspannungseinheit und an die Anschlusskontakte angeschlossen ist und die ausgebildet ist, die Schutzspannungseinheit zum Bereitstellen der Schutzspannung an den Anschlusskontakten abhängig von einem Schaltzustand der Schalteinheit mit den Anschlusskontakten elektrisch zu koppeln.

In Bezug auf eine gattungsgemäße Elektrolysevorrichtung wird mit der Erfindung insbesondere vorgeschlagen, dass diese eine Schaltungsanordnung gemäß der Erfindung aufweist, die an die wenigstens eine Elektrolysezelle angeschlossen ist.

In Bezug auf ein gattungsgemäßes Verfahren wird mit der Erfindung insbesondere vorgeschlagen, dass die wenigstens eine Elektrolysezelle abhängig vom erfassten elektrischen Elektrolysestrom mit einer Schutzspannung beaufschlagt wird, die für die wenigstens eine Elektrolysezelle individuell bereitgestellt wird.

Die Erfindung basiert unter anderem auf dem Gedanken, dass die Sicherheit der Elektrolysevorrichtung, insbesondere der wenigstens einen Elektrolysezelle, außerhalb des bestimmungsgemäßen Elektrolysebetriebs deutlich verbessert werden kann, wenn für jede Elektrolysezelle eine individuelle Schutzspannung bereitgestellt werden kann, die ausreichend hoch gewählt ist, die eingangs genannten gefährlichen Zustände zu vermeiden, jedoch zugleich so gewählt ist, dass eine Elektrolysewirkung im Wesentlichen noch nicht bereitgestellt werden wird. Dadurch besteht die Möglichkeit, auch bei einer Vielzahl von Elektrolysezellen einer Elektrolysevorrichtung gezielt und individuell auf spezifische Eigenschaften einer jeweiligen Elektrolysezelle einzugehen und somit einen zuverlässigen, sicheren Betriebszustand außerhalb der bestimmungsgemäßen Elektrolysefunktionalität bereitstellen zu können. Die eingangs genannten Probleme des Stands der Technik können dadurch weitgehend vermieden zumindest jedoch reduziert werden.

Die Schutzspannungseinheit kann für jede der Elektrolysezellen individuell einstellbar sein, sodass für jede der Elektrolysezellen einer Elektrolysevorrichtung eine jeweilige individuelle Schutzspannung bereitgestellt werden kann. Besonders vorteilhaft kann vorgesehen sein, dass die individuelle Schutzspannung für eine jeweilige Elektrolysezelle individuell eingestellt werden kann. Natürlich kann auch vorgesehen sein, dass für mehrere Elektrolysezellen eine gemeinsame Schutzspannungseinheit vorgesehen ist, die an die entsprechenden Zellenanschlüsse dieser Elektrolysezellen angeschlossen ist, sodass für jede der Elektrolysezellen eine individuelle Schutzspannung bereitgestellt werden kann. Natürlich können auch Kombinationen hiervon vorgesehen sein.

Dadurch, dass mit der Schutzspannungseinheit eine Schutzspannung bereitgestellt werden kann, kann zugleich auch erreicht werden, dass ein Stromfluss durch die jeweilige Elektrolysezelle nur sehr klein zu sein braucht, sodass einerseits die Hilfsspannungsquelle nur für einen kleinen Bruchteil der Leistung der Elektrolyseenergiequelle ausgelegt zu sein braucht und andererseits eine Produktion von Elektrolyseprodukten, insbesondere Gasen, weitgehend reduziert werden kann. Insbesondere kann ein Zellenstrom der wenigstens einen Elektrolysezelle im Wesentlichen null sein. Dies erlaubt es, die im Stand der Technik auftretenden Gefahren weitgehend zu vermeiden. Darüber hinaus können auch die im Stand der Technik auftretenden undefinierten Zustände in Bezug auf die Verfahrenstechnik weitgehend vermieden werden. Schließlich kann auch die Würdigung der Gefährdungsbetrachtung erheblich reduziert werden, insbesondere in Bezug auf ein HAZOP-Verfahren (Hazard and Operability) beziehungsweise PAAG-Verfahren (Prognose, Auffinden, Abschätzen, Gegenmaßnahmen).

Die Schutzspannungseinheit ist vorzugsweise eine elektronische Schaltung beziehungsweise Hardware-Schaltung, die von der Hilfsspannungsquelle mit elektrischer Energie versorgt wird. Die elektronische Schaltung ist vorzugsweise mit der elektrischen Spannung der Hilfsspannungsquelle beaufschlagt, sodass sie infolgedessen die jeweilige Schutzspannung entsprechend bereitstellt. Vorzugsweise ist diese Schaltungsanordnung für jede Elektrolysezelle individuell vorgesehen. Es kann aber auch vorgesehen sein, dass die elektronische Schaltung für zwei oder mehrere Elektrolysezellen ausgelegt ist. Die Schutzspannung kann für eine Elektrolyse von Wasser zum Beispiel in einem Bereich von etwa 1,35 V bis etwa 1,45 V gewählt sein. Die Betriebsspannung beim bestimmungsgemäßem Elektrolysebetrieb ist in der Regel größer als die Schutzspannung. Im bestimmungsgemäßen Elektrolysebetrieb kann die Betriebsspannung an einer jeweiligen Elektrolysezelle bei der Elektrolyse von Wasser etwa 1,9 V betragen. Durch geeignete Elektrolyten und/oder Katalysatoren kann diese Spannung unter Umständen auch etwa 1,8 V betragen. Diese Werte sind jedoch abhängig von den jeweiligen konkreten Anwendungen und den zu elektrolysierenden Stoffen. Bei der Elektrolyse von Kohlenstoffdioxid oder einem anderen Stoff können diese Werte natürlich abweichend sein.

Die Schalteinheit dient dazu, die Schutzspannungseinheit nur dann mit den Anschlusskontakten elektrisch zu koppeln, wenn die wenigstens eine Elektrolysezelle beziehungsweise die Elektrolysevorrichtung nicht im bestimmungsgemäßen Elektrolysebetrieb ist. Dadurch können unerwünschte Wechselwirkungen während des bestimmungsgemäßen Elektrolysebetriebs weitgehend vermieden werden. Die Schalteinheit kann hierzu elektromechanische Schaltelemente oder auch elektronische Schaltelemente aufweisen.

Das elektromechanische Schaltelement kann zum Beispiel durch ein Relais, ein Schütz, einen Reed-Kontakt und/oder dergleichen gebildet sein.

Zur Bereitstellung der gewünschten Schaltfunktionalität kann auch ein elektronisches Schaltelement eingesetzt werden, insbesondere ein Halbleiterschalter beziehungsweise Halbleiterschaltelement, welches im Schaltbetrieb betrieben wird. Ein solches Halbleiterschaltelement kann zum Beispiel ein Transistor im Schaltbetrieb, ein Thyristor oder dergleichen sein. In Bezug auf ein Halbleiterschaltelement unter Nutzung eines Transistors bedeutet der Schaltbetrieb, dass in einem eingeschalteten Schaltzustand zwischen den eine Schaltstrecke bildenden Anschlüssen des Transistors ein sehr kleiner elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren.

Dem Grunde nach brauchen nicht sämtliche Anschlusskontakte mittels eines Schaltelements der Schalteinheit angeschlossen zu sein. Um die Bereitstellung der Schutzspannung an einer jeweiligen Elektrolysezelle unterbrechen zu können, reicht es bereits aus, für die jeweilige Elektrolysezelle lediglich einen der Anschlusskontakte über ein Schaltelement anzuschließen. Sind jedoch Elektrolysezellen in Reihe geschaltet, ist es zweckmäßig, vorzugsweise sämtliche der Anschlusskontakte über Schaltelemente anzuschließen. Besonders vorteilhaft erweist es sich dabei auch, dass hierbei eine galvanische Trennung der Schutzspannungseinheit von den Elektrolysezellen erreicht werden kann.

Vorzugsweise werden die Schaltelemente der Schalteinheit gemeinsam geschaltet. Zu diesem Zweck kann die Schalteinheit eine entsprechend geeignete Steuerschaltung aufweisen. Die Steuereinheit kann dazu ausgebildet sein, mittels eines geeigneten Steuersignals den jeweiligen Schaltzustand der Schalteinheit zu realisieren. Dem Grunde nach besteht auch die Möglichkeit, dass die Steuerschaltung ausgebildet ist, manuell betätigt zu werden, um den jeweiligen Schaltzustand entnehmen zu können. Auch Kombinationen hiervon können vorgesehen sein.

Es wird ferner vorgeschlagen, dass die Schutzspannungseinheit zum Bereitstellen der Schutzspannung einen mit der elektrischen Hilfsspannungsquelle elektrisch gekoppelten elektronischen Spannungswandler aufweist. Dadurch besteht die Möglichkeit, die durch die Hilfsspannungsquelle bereitgestellte elektrische Spannung auf die Schutzspannung umzuformen, sodass die jeweilige individuelle Schutzspannung für die jeweilige Elektrolysezelle zuverlässig bereitgestellt werden kann.

Der elektronische Spannungswandler kann zum Beispiel als getakteter Energiewandler nach Art eines DC/DC-Wandlers oder dergleichen ausgebildet sein. Darüber hinaus kann der Spannungswandler natürlich auch lediglich passive elektronische Bauteile aufweisen, um die jeweilige individuelle Schutzspannung für die jeweilige Elektrolysezelle bereitstellen zu können. Auch Kombinationen hiervon können vorgesehen sein.

Vorzugsweise ist der Spannungswandler als Längsregler ausgebildet. Durch den Längsregler kann eine besonders schnelle und zuverlässige beziehungsweise stabile Regelung beziehungsweise Einstellung der Schutzspannung für die wenigstens eine, vorzugsweise für eine jeweilige der Elektrolysezellen, realisiert werden. Vorzugsweise ist für jede Elektrolysezelle ein eigener Längsregler vorgesehen. Dadurch kann eine besonders einfache Einstellung der Schutzspannung realisiert werden. Vorzugsweise sind die Längsregler einstellbar ausgebildet, und zwar besonders bevorzugt einstellbar mittels der Steuerschaltung. Dadurch besteht die Möglichkeit, sämtliche Längsregler über eine zentrale Steuerung individuell einstellen zu können, um die jeweilige Schutzspannung individuell bereitstellen zu können. Darüber hinaus besteht natürlich die Möglichkeit, zusätzliche Funktionalitäten zu realisieren, beispielsweise auf Zustandsänderungen jeweiliger Elektrolysezellen individuell zu reagieren, die mittels geeigneter Sensoren beziehungsweise Sensoreinheiten erfasst werden können und die beispielsweise eine Gasproduktion, eine Temperatur oder dergleichen erfassen können. Abhängig von diesen Sensorsignalen können dann die jeweiligen Längsregler entsprechend eingestellt werden.

Der Längsregler hat darüber hinaus den Vorteil, dass die Schutzspannung in einem Weitenbereich im Wesentlichen unabhängig von dessen Belastung mit elektrischem Strom konstant gehalten werden kann.

Darüber hinaus wird vorgeschlagen, dass der Spannungswandler wenigstens eine Diode und/oder wenigstens einen elektrischen Widerstand aufweist, die beziehungsweise der dem Bereitstellen der Schutzspannung dient. So kann zum Beispiel vorgesehen sein, dass die Schutzspannung über eine einzelne oder mehrere in Reihe geschaltete Dioden unmittelbar bereitgestellt wird, die mit einem entsprechenden elektrischen Strom beaufschlagt sind. Dem Grunde nach besteht diese Möglichkeit natürlich auch mit einem elektrischen Widerstand. Das heißt, an der Diode beziehungsweise der Reihenschaltung der Dioden beziehungsweise dem elektrischen Widerstand kann die jeweilige Schutzspannung unmittelbar abgegriffen und den jeweiligen Anschlusskontakten zugeführt werden. Das Einstellen der Schutzspannung kann durch Einstellen des jeweiligen Stroms der Diode beziehungsweise des Widerstands realisiert werden. Vorzugsweise ist für jede Elektrolysezelle eine Diode beziehungsweise ein elektrischer Widerstand beziehungsweise eine Reihenschaltung von Dioden vorgesehen. Die Diode kann dem Grunde nach auch eine Zenerdiode sein.

Darüber hinaus wird vorgeschlagen, dass die Schaltungsanordnung an zumindest an die Schalteinheit angeschlossene Sensoreinheit aufweist, die ausgebildet ist, einen Elektrolysestrom beziehungsweise einen Zellenstrom der wenigstens einen Elektrolysezelle zu erfassen und ein entsprechendes Sensorsignal zumindest an die Schalteinheit zu übermitteln. Das Sensorsignal kann darüber hinaus auch an die Steuerschaltung der Schalteinheit übermittelt werden. Aufgrund des Sensorsignals kann ein Betriebszustand der Elektrolysevorrichtung beziehungsweise der Elektrolysezellen ermittelt werden, und zwar insbesondere der Elektrolysebetrieb beziehungsweise ein gestörter Betriebszustand oder ein ausgeschalteter Betriebszustand. Abhängig von dem hierdurch ermittelten Betriebszustand können dann die Schalteinheit und die Schutzspannungseinheit betrieben werden. Dem Grunde nach kann natürlich auch vorgesehen sein, dass die Schalteinheit beziehungsweise die Schaltungsanordnung eine Kommunikationsschnittstelle aufweist, über die entsprechende Funktionen eingestellt werden können und über die Einstellungen der Schaltungsanordnung, insbesondere der Schalteinheit und der Schutzspannungseinheit, abgefragt werden können. Dies ist vorteilhaft für eine Automatisierung der Steuerung der Schaltungsanordnung beziehungsweise der Elektrolysevorrichtung.

In Bezug auf die Elektrolysevorrichtung wird ferner vorgeschlagen, dass diese eine Steuereinheit aufweist, die ausgebildet ist, einen Betriebszustand der Elektrolyseenergiequelle zu erfassen und abhängig vom erfassten Betriebszustand ein Zustandssignal an die Schaltungsanordnung zu übermitteln, wobei die Schaltungsanordnung ausgebildet ist, abhängig vom Zustandssignal eine Schutzspannung für die wenigstens eine Elektrolysezelle bereitzustellen. Dadurch ist es möglich, automatisiert den Betriebszustand der Elektrolyseenergiequelle zu erfassen und mittels des Zustandssignals den Betrieb der Schaltungsanordnung in geeigneter Weise zu steuern, um auch außerhalb des bestimmungsgemäßen Elektrolysebetriebs gefährliche Zustände weitgehend vermeiden zu können. Das Zustandssignal kann zum Beispiel an die Steuerschaltung der Schaltungsanordnung beziehungsweise der Schalteinheit übermittelt werden, welche dieses Zustandssignal entsprechend auswertet.

Darüber hinaus kann vorgesehen sein, dass die Elektrolysevorrichtung eine Trenneinheit aufweist, die ausgebildet ist, die Elektrolyseenergiequelle abhängig von einem Schaltzustand der Trenneinheit von der wenigstens einen Elektrolysezelle elektrisch zu trennen. Diese Weiterbildung hat den Vorteil, dass Wechselwirkungen zwischen der Schaltungsanordnung und der Elektrolyseenergiequelle weitgehend vermieden werden können. Ist nämlich die Elektrolyseenergiequelle in einem beispielsweise gestörten Betriebszustand, der einen elektrischen Kurzschluss realisiert, kann durch die Trenneinheit erreicht werden, dass an die Elektrolysezelle trotzdem mittels der Schaltungsanordnung der Erfindung die gewünschten Schutzspannungen an die jeweiligen Elektrolysezellen angelegt werden können. Die Sicherheit der Elektrolysevorrichtung kann dadurch weiter verbessert werden.

Die für die erfindungsgemäße Schaltungsanordnung angegebenen Vorteile gelten natürlich gleichermaßen auch für die erfindungsgemäße Elektrolysevorrichtung und das erfindungsgemäße Verfahren und umgekehrt. Insofern können Vorrichtungsmerkmale auch als Verfahrensmerkmale und umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
- FIG 1: in einer eine schematischen Schaltbilddarstellung eine Elektrolysevorrichtung mit einer Mehrzahl von in Reihe geschalteten Elektrolysezellen, die an eine Elektrolyseenergiequelle und eine dazu parallelgeschaltete Hilfsenergiequelle angeschlossen sind;
- FIG 2: in einer schematischen Diagrammdarstellung eine Badkennlinie für eine Elektrolysezelle der Elektrolysevorrichtung gemäß FIG 1, bei der eine Zellenspannung der Elektrolysezelle abhängig von einem Elektrolysestrom der Elektrolysezelle dargestellt ist;
- FIG 3: in einer schematischen Schaltbilddarstellung wie FIG 1 eine Elektrolysevorrichtung, bei der zu jeder einzelnen Elektrolysezelle jeweils zwei in Reihe geschaltete Dioden mittels Schaltelementen parallelschaltbar sind, die durch eine Hilfsspannungsquelle mit elektrischer Energie beaufschlagt sind;
- FIG 4: eine schematische Schaltbilddarstellung wie FIG 3, bei der die Dioden durch Längsregler ersetzt sind, und
- FIG 5: eine schematische Schaltbilddarstellung wie FIG 4, bei der die Längsregler parallelgeschaltet an die Hilfsspannungsquelle angeschlossen sind.

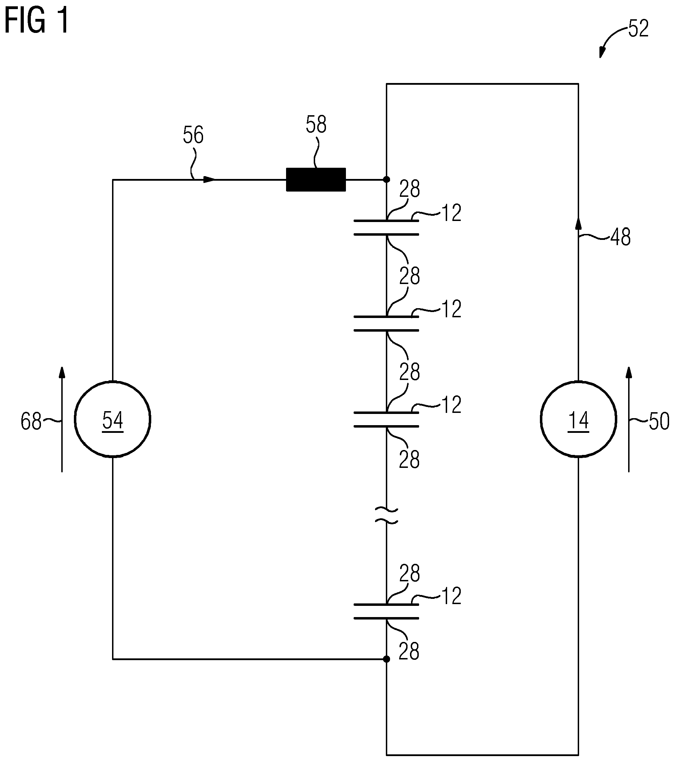

FIG 1 zeigt in einer schematischen Schaltbilddarstellung eine Elektrolysevorrichtung 52 mit einer Mehrzahl von elektrisch in Reihe geschalteten Elektrolysezellen 12. Die Elektrolysezellen 12 dienen der Elektrolyse von Wasser zu Wasserstoff und Sauerstoff. In alternativen Ausgestaltungen kann hier natürlich auch ein anderer Stoff der Elektrolyse unterzogen werden, um diesen in entsprechende andere Stoffe umzuwandeln.

Die in Reihe geschalteten Elektrolysezellen 12 sind an einen Hauptgleichrichter 14 als Elektrolyseenergiequelle angeschlossen. Der Hauptgleichrichter 14 stellt eine Betriebsspannung 50 bereit, mit der die Reihenschaltung der Elektrolysezellen 12 beaufschlagt wird, sodass im bestimmungsgemäßen Elektrolysebetrieb ein Elektrolysestrom 48 die Elektrolysezellen 12 durchströmt.

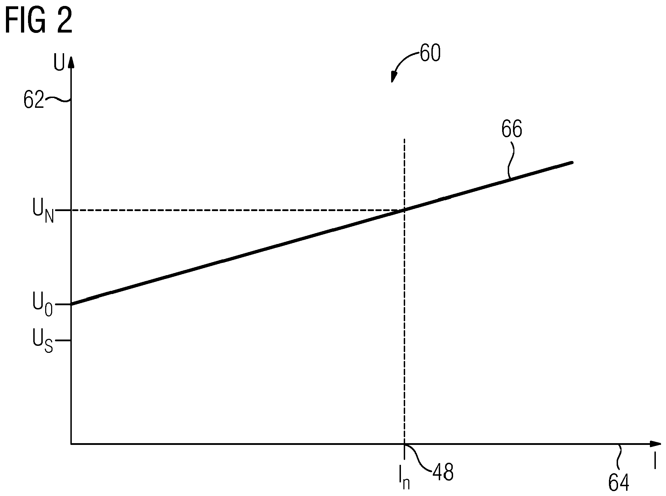

Parallel zum Hauptgleichrichter 14 ist an die Reihenschaltung der Elektrolysezellen 12 eine Reihenschaltung aus einem Polarisationsgleichrichter 54 und einer Schutzinduktivität 58 als Hilfsenergiequelle geschaltet. Der Polarisationsgleichrichter 54 und die Schutzinduktivität 58 dienen dazu, außerhalb des bestimmungsgemäßen Elektrolysebetriebs die Elektrolysezellen 12 mit einer Gleichrichterspannung 68 zu beaufschlagen, die so gewählt ist, dass sich ein Schutzstrom 56 einstellt, der seinerseits so gewählt ist, dass sämtliche Elektrolysezellen 12 zumindest mit einer Polarisationsspannung U₀ (FIG 2) beaufschlagt sind. Dadurch sollen unerwünschte Prozesse in den Elektrolysezellen 12 außerhalb des bestimmungsgemäßen Elektrolysebetriebs vermieden werden.

FIG 2 zeigt in einer schematischen Diagrammdarstellung ein Diagramm 60, bei dem eine Ordinate 62 einer Zellenspannung an jeweiligen Zellenanschlüssen 28 einer einzelnen der Elektrolysezellen 12 zugeordnet ist. Eine Abszisse 64 ist dem entsprechenden Zellenstrom dieser Elektrolysezelle 12 zugeordnet. Mit einem Graphen 66 ist die Abhängigkeit der Zellenspannung vom Zellenstrom dargestellt. U_{N} bezeichnet eine Elektrolysespannung, die sich an der Elektrolysezelle 12 im bestimmungsgemäßen Elektrolysebetrieb einstellt, wenn die Elektrolysezelle 12 mit einem Elektrolysestrom 48 beaufschlagt ist. Ein Schnittpunkt des Graphen 66 mit der Ordinate 62 definiert die Polarisationsspannung U₀, deren Unterschreitung einen Polarisationswechsel des Zellenstroms zur Folge haben kann.

In der vorliegenden Ausgestaltung einer Elektrolysezelle für die Elektrolyse von Wasser beträgt die Elektrolysespannung etwa 1,8 bis 1,9 V. Die Polarisationsspannung U₀ kann in der vorliegenden Ausgestaltung etwa 1,48 V betragen. Bei einer Zellenspannung, die größer als etwa 1,48 V ist, beginnt bei der Elektrolysezelle 12 die Elektrolysefunktionalität, indem Wasserstoff sowie Sauerstoff erzeugt wird.

Die Elektrolysevorrichtung 52 erweist sich insofern als nachteilig, als dass es außerhalb des eigentlichen Elektrolyseprozesses beziehungsweise des bestimmungsgemäßen Elektrolysebetriebs weiterhin zu einer Gasproduktion kommen kann. Dabei kann es zu undefinierten Zuständen in der Elektrolysevorrichtung 52 kommen, die im ungünstigsten Fall sogar ein Entstehen eines zündfähigen Gasgemisches zur Folge haben kann. Um hier die Sicherheit zu gewährleisten, sind ergänzende umfangreiche Schutzmaßnahmen erforderlich.

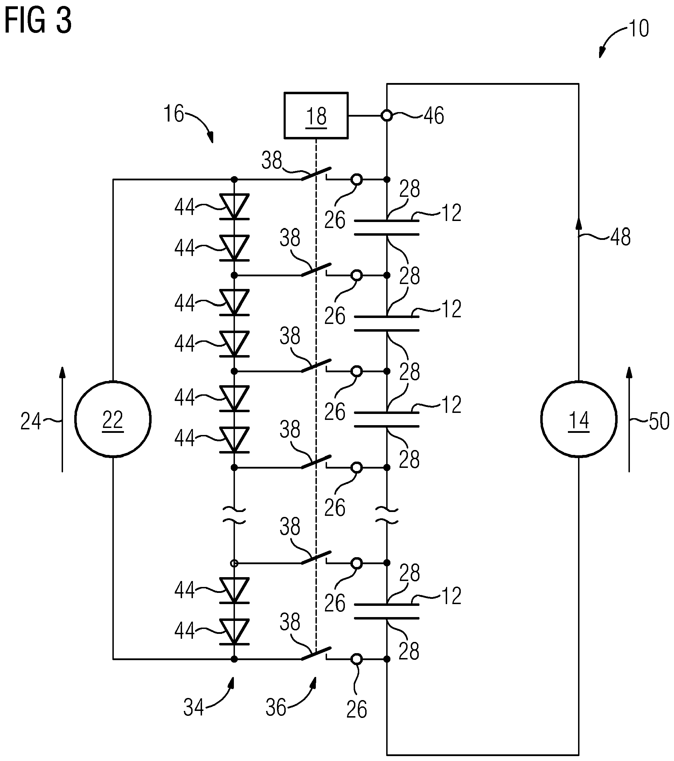

FIG 3 zeigt nun eine Elektrolysevorrichtung 10, bei der die vorgenannten Probleme reduziert, wenn nicht sogar vollständig vermieden werden können. Die Elektrolysevorrichtung 10 basiert auf der Elektrolysevorrichtung 52 gemäß FIG 1, weshalb ergänzend auf die diesbezüglichen Ausführungen verwiesen wird. Auch hier ist eine Reihenschaltung aus einer Mehrzahl von Elektrolysezellen 12 vorgesehen, die parallel an den Hauptgleichrichter 14 angeschlossen ist, um im bestimmungsgemäßen Elektrolysebetrieb mit elektrischer Energie versorgt zu werden. Insoweit entspricht die Elektrolysevorrichtung 10 der Elektrolysevorrichtung 52, weshalb auf die entsprechenden Ausführungen zu den FIG 1 und 2 verwiesen wird.

Im Unterschied zur Ausgestaltung gemäß FIG 1 ist bei der Elektrolysevorrichtung 10 gemäß FIG 3 vorgesehen, dass diese eine elektrische Hilfsspannungsquelle 22 aufweist, die dem Bereitstellen einer elektrischen Hilfsgleichspannung 24 dient. Die Elektrolysevorrichtung 10 weist ferner eine Schaltungsanordnung 16 auf, die an die Elektrolysezellen 12 angeschlossen ist.

Die Schaltungsanordnung 16 weist die elektrische Hilfsspannungsquelle 22 auf, die dem Bereitstellen einer elektrischen Hilfsgleichspannung 24 dient. Ferner umfasst die Schaltungsanordnung 16 Anschlusskontakte 26 zum elektrischen Verbinden mit Zellenanschlüssen 28 der Elektrolysezellen 12 der Reihenschaltung. In der vorliegenden Ausgestaltung ist also vorgesehen, dass sämtliche Zellenanschlüsse 28 auch elektrisch mit der Schaltungsanordnung 16 gekoppelt sind.

Die Schaltungsanordnung 16 weist ferner eine Schutzspannungseinheit 34 auf, die mit der elektrischen Hilfsspannungsquelle 22 elektrisch gekoppelt ist. Die Schutzspannungseinheit 34 stellt für jede der Elektrolysezellen 12 eine individuelle Schutzspannung U_{S} für die jeweilige Elektrolysezelle 12 bereit.

Die Schutzspannung U_{S} (FIG 2) ist so gewählt, dass an keiner der Elektrolysezellen 12 eine Brennstoffzellenwirkung entsteht, das heißt, Gasreste in einer jeweiligen Elektrolyse 12 nach dem Brennstoffzellenprinzip zu Wasser reagieren und damit Energie freisetzen. Dies kann zu einer erheblichen Alterung einer jeweiligen Elektrolysezelle 12 führen.

Die Schaltungsanordnung 16 weist ferner eine Schalteinheit 36 auf, die an die Schutzspannungseinheit 34 und an die Anschlusskontakte 26 angeschlossen ist. Die Schalteinheit 36 ist ausgebildet, die Schutzspannungseinheit 34 zum Bereitstellen der Schutzspannung U_{S} an den Anschlusskontakten 26 abhängig von einem Schaltzustand der Schalteinheit 36 mit den Anschlusskontakten 26 elektrisch zu koppeln. Dadurch ist die Möglichkeit geschaffen, dass die Schutzspannungseinheit 34 nur dann mit den Elektrolysezellen 12 elektrisch verbunden zu sein braucht, wenn dies aufgrund der Betriebssituation der Elektrolysevorrichtung 10 erforderlich beziehungsweise gewünscht ist. So kann die Schutzspannungseinheit 34 mittels der Schalteinheit 36 gegenüber den Elektrolysezellen 12 deaktiviert werden, wenn die Elektrolysezellen 12 bestimmungsgemäß im Elektrolysebetrieb betrieben werden.

Die Schalteinheit 36 weist daher für jeden der Anschlusskontakte 26 jeweils ein individuelles Schaltelement 38 auf, welches vorliegend durch ein Read-Relais beziehungsweise Read-Kontakt gebildet ist. In alternativen Ausgestaltungen kann hier natürlich auch ein entsprechendes Relais beziehungsweise ein Schütz oder auch ein elektronisches Schaltelement vorgesehen sein.

Die Schaltelemente 38 werden hinsichtlich ihres jeweiligen Schaltzustands von einer Steuereinheit 18 der Elektrolysevorrichtung 10 gemeinsam gesteuert, sodass sämtliche der Schaltelemente 38 im Wesentlichen jeweils den gleichen Schaltzustand einnehmen. Die Steuereinheit 18 kann zu diesem Zweck eine Steuerschaltung umfassen, die unter anderem auch der Steuerung der Schaltungsanordnung 16 dient.

Die Schutzspannungseinheit 34 weist zum Bereitstellen der Schutzspannung U_{S} einen mit der elektrischen Hilfsspannungsquelle 22 gekoppelten elektronischen Spannungswandler auf, der vorliegend durch eine Reihenschaltung von Dioden 44 gebildet ist. Jeweils zwei unmittelbar aufeinander in Reihe geschaltete Dioden 44 werden im eingeschalteten Schaltzustand der Schalteinheit 36 mit einer jeweiligen der Elektrolysezellen 12 elektrisch verbunden.

Im vorliegenden Fall sind die Dioden 44 durch Siliziumdioden gebildet. Dadurch kann auf einfache Weise die gewünschte Schutzspannung für jede der Elektrolysezellen 12 individuell bereitgestellt werden. Die Schutzspannung U_{S} ist kleiner als die Polarisationsspannung U₀. Daher kann die Leistung, die durch die Schaltungsanordnung 16 bereitzustellen ist, gegenüber der Elektrolysevorrichtung 52 gemäß FIG 1 erheblich reduziert werden. Zugleich wird dadurch, dass durch die Elektrolysezellen 12 nur ein sehr kleiner, insbesondere vernachlässigbarer elektrischer Strom geführt zu werden braucht, auch die gegenüber der Elektrolysevorrichtung 52 ungünstige Gasentwicklung reduziert, wenn nicht sogar vollständig vermieden.

Zum Steuern der Schalteinheit 36 ist in der vorliegenden Ausgestaltung vorgesehen, dass der Zellenstrom der Reihenschaltung der Elektrolysezellen 12 mittels eines Stromsensors 46 als Sensoreinheit erfasst wird. Der Stromsensor 46 liefert ein entsprechendes Sensorsignal an die Steuereinheit 18, die dieses Signal auswertet. Sobald das Sensorsignal kleiner als ein vorgegebener Vergleichswert ist, wird die Schalteinheit 36 vom ausgeschalteten Schaltzustand in den eingeschalteten Schaltzustand umgeschaltet. Das bedeutet, dass durch die Schaltungsanordnung 16, die hierdurch nun aktiviert ist, jede Elektrolysezelle 12 mit der entsprechenden Schutzspannung U_{S} beaufschlagt ist.

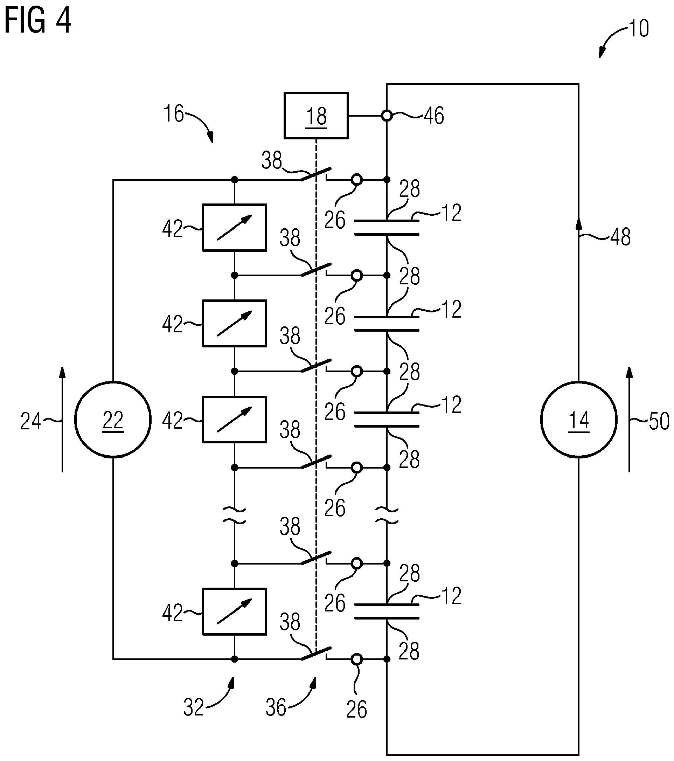

FIG 4 zeigt in einer schematischen Schaltbilddarstellung wie FIG 3 eine alternative Ausgestaltung der Elektrolysevorrichtung 10. Im Folgenden werden lediglich die Unterschiede zur Ausgestaltung der Elektrolysevorrichtung 10 gemäß FIG 3 erläutert. Die weiteren Merkmale und Funktionen entsprechen denen, wie sie bereits zur Elektrolysevorrichtung 10 anhand von FIG 3 erläutert worden sind.

Im Unterschied zur Ausgestaltung gemäß FIG 3 weist die Ausgestaltung gemäß FIG 4 eine Schutzspannungseinheit 32 auf, die einen Spannungswandler aus in Reihe geschalteten Längsreglern 42 aufweist. Die Längsregler 42 sind vorliegend einstellbar ausgebildet und können durch die Steuereinheit 18 hinsichtlich ihrer jeweiligen Schutzspannung U_{S} individuell eingestellt werden. Die Einstellung der Längsregler 42 kann manuell bei einer Wartung oder einer Inbetriebnahme der Elektrolysevorrichtung 10 erfolgen oder aber sie kann auch nach Art einer Regelung erfolgen, indem zum Beispiel jeweilige Zellenspannungen oder Betriebszustände der Elektrolysezellen 12 individuell erfasst werden und für eine Regelung genutzt werden. Die Reihenschaltung der Längsregler 42 wird wie bei der Ausgestaltung gemäß FIG 3 von der Hilfsspannungsquelle 22 mit der Hilfsgleichspannung 24 beaufschlagt.

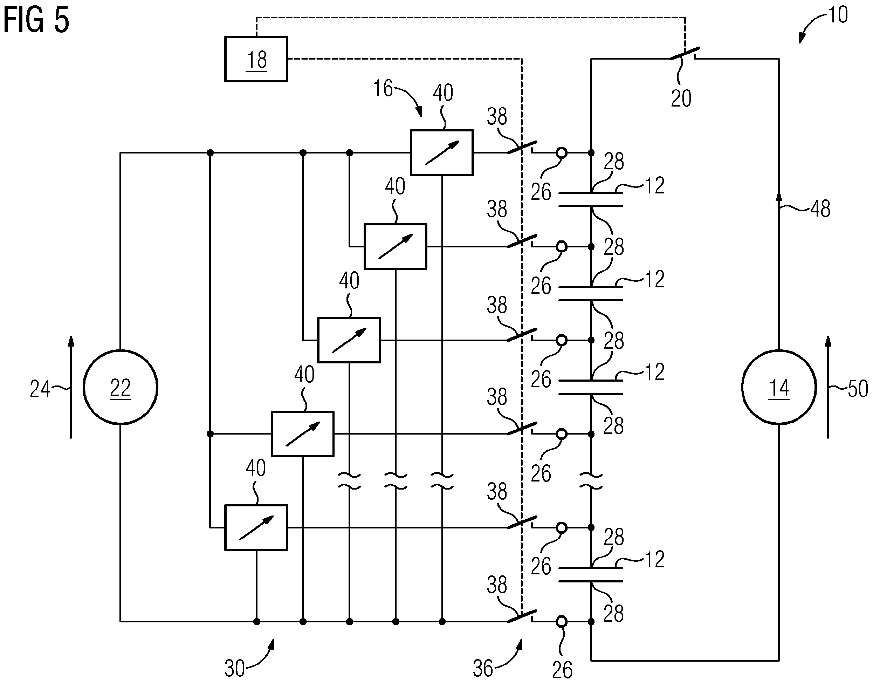

FIG 5 zeigt eine weitere Ausgestaltung für eine Elektrolysevorrichtung 10, die ebenfalls auf der Ausgestaltung der Elektrolysevorrichtung 10 gemäß FIG 3 basiert, weshalb ebenfalls ergänzend auf die diesbezüglichen Ausführungen verwiesen wird. Im Folgenden werden lediglich die Unterschiede weiter erläutert.

Aus FIG 5 ist ersichtlich, dass eine Schutzspannungseinheit 30 vorgesehen ist, die für jede Elektrolysezelle 12 einen jeweiliger Spannungswandler 40 aufweist, der mittels der Steuereinheit 18 eingestellt werden kann, wie dies bereits anhand der Ausgestaltung gemäß FIG 4 erläutert ist. In der vorliegenden Ausgestaltung sind die Spannungswandler 40 parallel an die Hilfsspannungsquelle 22 angeschlossen und werden von dieser mit der Hilfsgleichspannung 24 beaufschlagt. Die Spannungswandler 40 werden so eingestellt, dass für jede der Elektrolysezellen 12 die jeweils individuelle Schutzspannung U_{S} bereitgestellt werden kann.

In dieser Ausgestaltung ist vorgesehen, dass die Spannungswandler 40 durch einen getakteten Spannungswandler nach Art eines DC/DC-Wandlers ausgebildet sind. In alternativen Ausgestaltungen kann hier natürlich ebenfalls auch ein Längsregler wie der Längsregler 42 gemäß FIG 4 vorgesehen sein.

Darüber hinaus ist vorliegend vorgesehen, dass der Hauptgleichrichter 14 über eine Trenneinheit 20, die vorliegend als Schütz ausgebildet ist, von den Elektrolysezellen 12 elektrisch getrennt werden kann. Dies ist vorteilhaft, wenn der Hauptgleichrichter 14 eine Störung aufweist, die zum Beispiel einen Kurzschluss oder dergleichen zur Folge haben kann. Ist die Elektrolysevorrichtung 10 nicht im bestimmungsgemäßen Elektrolysebetrieb, kann die Trenneinheit 20 mittels der Steuereinheit 18 in den ausgeschalteten Zustand geschaltet werden, sodass der Hauptgleichrichter 14 von den Elektrolysezellen 12 elektrisch getrennt ist. Besonders vorteilhaft kann mittels der Steuereinheit 18 eine Verriegelung derart vorgesehen sein, dass entweder nur die Schalteinheit 36 oder die Trenneinheit 20 im eingeschalteten Schaltzustand ist.

Die Ausführungsbeispiele dienen ausschließlich der Erläuterung der Erfindung und sollen diese nicht beschränken.

## Patentansprüche

1. Schaltungsanordnung (16) für wenigstens eine Elektrolysezelle (12) einer Elektrolysevorrichtung (10), mit:
- einer elektrischen Hilfsspannungsquelle (22), die dem Bereitstellen einer elektrischen Hilfsgleichspannung (24) dient, und
- Anschlusskontakten (26) zum elektrischen Verbinden mit Zellenanschlüssen (28) der wenigstens einen Elektrolysezelle (12),
**gekennzeichnet durch**
- eine Schutzspannungseinheit (30, 32, 34), die mit der elektrischen Hilfsspannungsquelle (22) elektrisch gekoppelt ist und die ausgebildet ist, eine individuelle Schutzspannung (U_{S}) für die wenigstens eine Elektrolysezelle (12) bereitzustellen, sowie
- eine Schalteinheit (36), die an die Schutzspannungseinheit (30, 32, 34) und an die Anschlusskontakte (26) angeschlossen ist und die ausgebildet ist, die Schutzspannungseinheit (30, 32, 34) zum Bereitstellen der Schutzspannung (U_{S}) an den Anschlusskontakten (26) abhängig von einem Schaltzustand der Schalteinheit (36) mit den Anschlusskontakten (26) elektrisch zu koppeln.

2. Schaltungsanordnung nach Anspruch 1, **dadurch gekennzeichnet, dass** die Schalteinheit (36) für jeden der Anschlusskontakte (26) wenigstens ein individuelles Schaltelement (38) aufweist.

3. Schaltungsanordnung nach einem der vorhergehenden Ansprüche, **dadurch gekennzeichnet, dass** die Schutzspannungseinheit (30, 32, 34) zum Bereitstellen der Schutzspannung (U_{S}) einen mit der elektrischen Hilfsspannungsquelle (22) elektrisch gekoppelten elektronischen Spannungswandler (40) aufweist.

4. Schaltungsanordnung nach Anspruch 3, **dadurch gekennzeichnet, dass** der Spannungswandler (40) als Längsregler (42) ausgebildet ist.

5. Schaltungsanordnung nach Anspruch 3 oder 4, **dadurch gekennzeichnet, dass** der Spannungswandler (40) wenigstens eine Diode (44) und/oder wenigstens einen elektrischen Widerstand aufweist, die beziehungsweise der dem Bereitstellen der Schutzspannung (U_{S}) dient.

6. Schaltungsanordnung nach einem der vorhergehenden Ansprüche, **gekennzeichnet durch** eine zumindest an die Schalteinheit (36) angeschlossene Sensoreinheit (46), die ausgebildet ist, einen Elektrolysestrom (48) der wenigstens einen Elektrolysezelle (12) zu erfassen und ein entsprechendes Sensorsignal zumindest an die Schalteinheit (36) zu übermitteln.

7. Elektrolysevorrichtung (10) mit wenigstens einer Elektrolysezelle (12) und einer an die wenigstens eine Elektrolysezelle (12) angeschlossenen Elektrolyseenergiequelle (14), **gekennzeichnet durch**
eine Schaltungsanordnung (16) nach einem der vorhergehenden Ansprüche, die an die wenigstens eine Elektrolysezelle (12) angeschlossen ist.

8. Elektrolysevorrichtung nach Anspruch 7, **gekennzeichnet durch** eine Steuereinheit (18), die ausgebildet ist, einen Betriebszustand der Elektrolyseenergiequelle (14) zu erfassen und abhängig vom erfassten Betriebszustand ein Zustandssignal an die Schaltungsanordnung (16) zu übermitteln, wobei die Schaltungsanordnung (16) ausgebildet ist, abhängig vom Zustandssignal eine Schutzspannung (U_{S}) für die wenigstens eine Elektrolysezelle (12) bereitzustellen.

9. Elektrolysevorrichtung nach Anspruch 7 oder 8, **gekennzeichnet durch** eine Trenneinheit (20), die ausgebildet ist, die Elektrolyseenergiequelle (14) abhängig von einem Schaltzustand der Trenneinheit (20) von der wenigstens einen Elektrolysezelle (12) elektrisch zu trennen.

10. Verfahren zum Betreiben einer Elektrolysevorrichtung (10), wobei wenigstens eine Elektrolysezelle (12) der Elektrolysevorrichtung (10) im bestimmungsgemäßen Betrieb mit einem elektrischen Elektrolysestrom (48) beaufschlagt wird, um eine Elektrolyse eines in einem Reaktionsraum der Elektrolysezelle (12) angeordneten Stoffs durchzuführen, und wobei der elektrische Elektrolysestrom (48) mittels einer Sensoreinheit (46) erfasst wird,
**dadurch gekennzeichnet, dass**
die wenigstens eine Elektrolysezelle (12) abhängig vom erfassten elektrischen Elektrolysestrom (48) mit einer Schutzspannung (U_{S}) beaufschlagt wird, die für die wenigstens eine Elektrolysezelle (12) individuell bereitgestellt wird.
